# EUROPEAN PATENT APPLICATION

(11) **EP 4 328 784 A1**
(43) Date of publication of application: **28.02.2024**
(21) Application number: 23189723.2
(22) Date of filing: 04.08.2023
(51) Int. Cl.: G06F 30/12, G06F 30/13, G01B 11/00, G01C 11/00, G06F 111/02

(54) **A METHOD FOR SELECTING A REFINED SCENE POINTS, DISTANCE MEASUREMENT AND A DATA PROCESSING APPARATUS**

(30) Priority: 16.08.2022 LU 502672
(71) Applicant: Becker-Lakus, Axel, 8637 Laupen (CH)
(72) Inventor: Becker-Lakus, Axel, 8637 Laupen (CH)
(74) Representative: Bauer, Karel

(57) **Abstract**

The present invention relates to a computer implemented method for selecting scene points in a 3D model. The method comprises the steps of providing scene being a feature point cloud representation. The feature point cloud representation is uploaded and/or stored on a server. In the next step, a 3D model comprising feature points in the first mesh representation is provided, wherein the first mesh representation is converted from a feature point cloud representation. In the next step, the scene of the 3D motor is displayed. The 3D model is provided or is displayed to a user on a client. The user pre-selects a scene point on the client and such a pre-selected scene point is transferred to a server via its descriptor. Based on the descriptor, scene points in pre-selected point neighbourhood is calculated or called and thereby a second mesh representation having higher information value compared to the first match representation is provided. Such a mesh representation is retrieved to the client and displayed to the user, wherein the user is capable to select a further point. Said second mesh representation overlays the first mesh representation. Thereby, a method provides cost effective and more accurate method of selecting points in the 3D model. The particular advantage can be seen in a distance measurement corresponding to a physical environment.

## Description

### FIELD OF THE INVENTION

In a first aspect, the present invention herein relates generally to a computer-implemented method capable of selecting a refined scene point in a 3D model. More particularly, the present invention relates to a scene point selection method that selects effective feature points for a recognition task from a plurality of feature points on a three-dimensional shape model.

In a second aspect, the present invention relates to a method for measuring distance between at least two points in a 3D model. In particular, the present invention relates to a method for selecting scene points in a 3D model, thereby providing improved and fast measurement, especially in a location inaccessible to measuring tools. More particularly, the present invention relates to measuring distances and areas of physical environments, e.g. for designing, understanding and redesigning spaces, not only indoors.

In a third aspect, the present invention relates to a data processing apparatus for carrying out the methods according to the present invention.

### BACKGROUND OF THE INVENTION

Measurements and floor plans are very important for understanding, designing, planning and redesigning interiors. Floor plans are generally effective in conveying geometric and semantic information about a physical environment. For example, a user can view a floor plan to quickly identify room dimensions, wall structures and corners, door and window locations, and object arrangements.

The automatic generation of a floor plan by computer is difficult and there are a number of problems to overcome, such as: the sensor data may be incomplete or not dense enough, there may be objects in the scene such as flower pots, lamps or furniture that further obscure the actual dimensions of interest and the actual layout of the indoor space, so they need to be removed. Furthermore, the different data acquisition modalities (such as LIDAR, structured light illumination or video and photogrammetry) require different processing methods to obtain a reliable model of the indoor space.

Photogrammetry is the science of obtaining measurements from photographs, especially for recovering the exact or near-exact positions of surface points. Photogrammetry has been known since 1867 and physical environments and objects therein have been modelled (e.g., reconstructed) by generating three-dimensional (3D) meshes, using 3D point clouds, and by other means. The reconstructed meshes represent 3D surface points and other surface features of the floors, walls, and other objects of the physical environments. Such reconstructions can be generated from images and depth measurements of the physical environments, e.g., using RGB cameras and depth sensors.

Existing techniques for generating 3D models based on images or video of a physical environment can be inaccurate and inefficient using a mobile device while walking around a room, and do not allow for automatic, accurate and efficient generation of floor plans and measurements.

Furthermore, although there is an extensive and very sophisticated body of work related to the creation of floor plans available, the existing methods are not reliable enough for e.g. cabinet makers, carpenters, kitchen makers to rely on this existing work when manufacturing furniture.

Furthermore, as the complexity and/or size of the generated 3D model increases, and as the operating memory and/or processing speed of portable computing devices comprising cameras, or other capture and displaying devices, such as a mobile phone or tablet, increases, there is a need for a method of transferring the computational task and subsequent display of a particular scene to a more accurately selected point in the 3D model is demanded.

A non-patent literature Sören Discher, et al. A scalable webGL-based approach for visualising massive 3D point clouds using semantics-dependent rendering techniques, In Proceedings of the 23rd International ACM Conference on 3D Web Technology (Web3D '18). Association for Computing Machinery, New York, NY, USA, Article 19, 1-9. https://doi.org/10.1145/3208806.3208816, discloses a web-based visualisation method for visualising of massive 3D point clouds. The method comprises processing the data in point cloud representation with additional attributes related to geodata. The method is particularly related to a computer rendering. However, the method is not capable of calculating addition points and their attributes that are not present in the original data.

WO 2020/236170 discloses a computer implemented system for interacting a 3D model with a client. The method comprises the step of identifying and selectively loading of interaction data. The disadvantage of the method is that the original data is based on a CAD model. Thus, a client wishing to obtain detailed information about an object captured, for example, by photogrammetry, would have to remodel the object.

The object of the present invention is therefore to provide a method for selecting a point originally represented in a point cloud representation of the physical object.

### SUMMARY OF THE INVENTION

In a first aspect, a method for selecting a refined scene point in a 3D model is provided.

The computer-implemented method for selecting a refined scene point in a 3D model is defined by claim 1.

The method, according to the present invention, is providing low-cost digitalization of an object placed in a physical environment and/or areas of interest. The present invention is particularly suitable for the purpose of selecting a scene point, e.g. for measuring distances and areas of physical environments, e.g. for designing inventories, and/or understanding and remodelling indoor spaces. The method according to the present invention further provides technical advantage in creating and viewing the 3D model on the portable computing means, for example a cell phone or a tablet, having low computation memory or computation processing frequency. Due to transferring of the computation tasks from the portable means of displaying to the server, it is possible to provide fast and low-cost digitalization of a complex object or oversize physical environment, which would not be possible to render or easy to select on the portable means for displaying.

The scene point means, within the context of the present invention, any point which can be found in the scene of the 3D model. In some aspects, it can be a feature point or a point in between two feature points. For example, a scene point can be a point on a cabinet or a work piece in a house.

A feature point is a well-known term in computer-processing image recognition, in particular photogrammetry. The feature point represents a single point in a computer modelled scene or a physical environment associated to a particular feature. In a particular embodiment, the feature point can be represented by a point photography showing furniture layout in an apartment, wherein the point is associated with particular furniture. In another embodiment, the feature point can be associated with a building in a city, wherein the city is scanned by LIDAR.

Within the context of the present invention, it shall be understood that the feature point and the scene point need not be the same point within the space, because the feature point is a priory rendered by the state-of-the-art software, such a software converting the captured physical environment data, e.g. based on photogrammetry method, into the feature point cloud representation. On the other hand, if the user selects exactly the same point which corresponds to both, the feature point and the scene point, it is a further advantage of the present invention, that the selection of the further scene point will be calculated more precisely.

3D model within the context of the present invention is a coordinate based representation of the surfaces of any object in the scene. The scene can be captured and transformed into data, for example into images, from different angles and/or perspectives, therefore, it can obtain high-resolution views of top and side views of the scene. The data can be captured, for example, by tilting the camera or scanning the camera through the real scene by translation movement. The image allows the user to observe the object from multiple angles, therefrom it is more realistically reflecting the current situation of the object. Through the supporting computer application, the point cloud and the real-life 3D model can be directly generated based on the resulting or generated image, and the user can perform point selection and measurement from multiple angles, and expand the application of the photogrammetry technology.

Feature point cloud representation is a set of data points in a scene associated with a particular feature. The points can represent an object. Each point position has its set of coordinates, for example Cartesian coordinated (x, y, z). The feature point cloud representation can be produced by 3D scanners or by photogrammetry software. In a preferred embodiment, the provision of the point cloud representation of the scene can comprise the step:
- scanning the physical environment by LIDAR, therefrom deriving the feature points; and/or
- scanning the physical environment by an infrared method, therefrom deriving the feature points; and/or
- scanning the physical environment by ultrasound, therefrom deriving the feature points; and/or
- scanning the physical environment by spectrometric method, therefrom deriving the feature points; and/or
- obtaining the feature points by means of photogrammetry; and/or
- obtaining the feature points by means of a computer-generated 3D model, which is not based on scan of the physical environment.

The feature point cloud can also be generated by a near-real 3D model through advanced positioning, fusion and modelling techniques as currently known in the state of the art.

Mesh object representation represents the object as a collection of vertices, edges and faces that defines the shape of the object. The faces may consist of triangles (triangle mesh) obtained by triangulation method well-known in the state of the art. The real-life 3D model can be generated by a high-number of feature points cloud based on a triangular mesh.

A physical environment represents a distribution of the feature in real word. It is desired that the scene and physical environment shall be indistinguishable.

A descriptor of the local feature is a vector containing information on the local feature, such spatial coordinates (x, y, z) of the scene point, representing its position in the 2D or 3D space; or additional attributes associated with the scene point, such as intensity, colour, or other scalar values, depending on the data captured by the sensor or model; or information about the local geometric properties, like normal vector or curvature, which describe the surface orientation and shape around the neighbouring scene point; or the distance between the neighbouring scene point and the reference point, which can be the point from which the search originated. If available, semantic labels or classifications associated with the neighbouring scene point, such as object labels (e.g., car, tree, building) in the case of LIDAR data. The descriptor may contain indications of point clusters or regions the neighbouring scene point. In some another embodiment, the description can contain information about any time-related attributes associated with the neighbouring scene point. The descriptors collectively provide a comprehensive representation of the neighbouring scene point's properties and are used for various purposes like point cloud processing, 3D reconstruction, object recognition, and more. In some embodiment, the descriptor may be generated by SIFT algorithm, SURF algorithm, FAST, ORB or AKAZE; in case of SIFT the vector contains information related to the feature object (such as blob or edge), location, scale or orientation. In a preferred embodiment, the descriptor ascribed to the scene point comprises the information on the position. Based on the position, it is possible to calculate a distance between two points on the scene. The calculation of the distance can be provided based on the Euclidean geometry.

A server can be computer hardware or software that provides functionality for other programs or devices, called "clients". This architecture is called the client-server model, according to the state of the art.

A client is a piece of computer hardware or software that accesses a service made available by a server as part of the client-server model of computer networks. The server is often, but not always, on another computer system, in which case the client accesses the service by way of a network.

Pre-selection of a scene point within the context of the present invention means determination of the first scene point in the 3D model. In some embodiment, it can be pointing and clicking or any other action recognized by the client based on the user input, such as moving a pointer to a certain location on a screen (pointing) and then pressing a button on a mouse (click), or other pointing device such as a pen - stylus or finger(s) on a touch screen.

In some embodiments, the calculation on the descriptors of neighbouring scene points, in the neighbourhood of the preselected scene point, can be based on Euclidean geometry or can be calculated based on the metric known to the skilled person in the art. According to this embodiment, the calculation of the neighbouring scene points are based on model with the pre-selected scene point, wherein it is desired to find the nearest points to a given point based on the Euclidean distance. The Euclidean distance is a geometric distance between two points in Euclidean space (e.g., in a plane or in 3D space). For a given point A and point B, the Euclidean distance is given by the formula: distance(A, B) = √((x_A - x_B)^2 + (y_A - y_B)^2 + (z_A - z_B)^2), where (x_A, y_A, z_A) are the coordinates of point A, and (x_B, y_B, z_B) are the coordinates of point B. The coordinates are presented in the descriptor of the pre-selected scene point. In addition, the present invention is capable to refine a new scene point, not originally presented in the first mesh representation. The step for determining a refined scene points descriptor comprising the steps of identifying an edge in proximity to a pre-selected scene point and determining the edge closest to the pre-selected scene point. Subsequently, said identified edge is divided or split to introduce a new vertex, thereby creating a refined model. The refined model includes the new vertex introduced by splitting the edge, which contributes to the calculation of the scene points descriptor. In another embodiment, the descriptors on the scene points can be called from the server memory so that the scene point in the neighbourhood of the preselected scene point are of higher information value. In some embodiment, the scene points can be organized in a tree-like structure and it is desired to find the nearest point in this structure. Thus, the step of calling the neighbouring scene points descriptor can use algorithms for Nearest Neighbour Search. In some embodiment, the subroutine can use algorithms like the "kd-tree" or "quadtree" for two-dimensional data structure. These algorithms partition the space into segments, enabling efficient search for the nearest points. In advance, it is possible to utilize the graph distance to determine another set of vertices that are close to the pre-selected scene point. The graph distance is used as a metric to identify vertices that are connected within a graph or network and are in proximity to the pre-selected scene point. Retrieving the identified sets of vertices from the server, thus obtaining the scene points associated with the pre-selected scene point using either the Euclidean distance or the graph distance. Based on the new descriptors, a second representation having a higher information value, compared to the first mesh representation, is refined.

The second representation is subsequently transferred from the server to a client where the first mesh representation is overlaid by the second representation, therefore obtaining higher information value on the scene. The second representation is then displayed to the user on a client, wherein the user can select a further point in the scene. Thereby, a more accurate point selection is obtained without the need to provide 3D model in higher information value for the whole range.

The second representation can be a point cloud representation or a second mesh representation. The overlaying of the representation can be replacing the first mesh representation by a second mesh representation having higher information value. In another embodiment, a second cloud representation can be displayed on a first mesh representation so that, the user can select a further scene point displayed over the first mesh representation.

In a preferred embodiment, the step of obtaining the feature points by means of photogrammetry comprising the step of capturing physical environment by a camera in a form of video and/or at least two pictures overlapping at least the part of the physical environment, camera positions and orientations, focal lengths, thereby obtaining physical environmental data; and converting the physical environmental data into the feature point cloud representation.

The image capturing apparatus herein refers to various image capturing apparatus which images objects in accordance with an imaging theory of a convex lens, including CCD or CMOS cameras, image capture device with a focusing function, video recording apparatus or the like.

In another preferred embodiment, feature points are provided by LIDAR, the method further comprising the steps of providing depth information on the physical environment.

In another preferred embodiment, the method of capturing the image comprises steps assessing physical environmental data captured by the camera for defects, in particular motion-based defects; and/or
grouping and calibrating physical environmental data captured by the camera according to pre-determined imaging characteristics such as geometric distortion, vignetting and/or colour aberrations.

In another preferred embodiment, the method comprises the step of pre-selecting a subset of the physical environment data captured by the camera.

In another preferred embodiment, the step of calculating descriptors comprising information on positions of the scene points in the neighbourhood of the pre-selected scene point based on the feature points comprising triangulation of the feature points.

In another preferred embodiment, the method further comprises the step of removing local artefacts from feature points in the first mesh representation.

In another preferred embodiment, the method further comprises compression of the second object representation of the scene for storing.

In another preferred embodiment, the method further comprises at least a part decompression of the second object representation of the scene for viewing of the scene model with limited data transfer.

In a preferred embodiment, the method further comprising a loop wherein the loop comprising the steps c) - h) in accordance with the claim 1.

In a further preferred embodiment, the second representation can be a mesh representation or a point cloud representation. Even more preferably, the step of overlying the second representation can be a replacement of the first mesh representation by the second mesh representation; or including the second point cloud representation into the first mesh representation.

A second aspect of the present invention concerns a method for measuring distance between two scene points in a 3D model. The method comprising the steps:
- selecting a first scene point; and
- selecting a further scene according to anyone of the claims 1 -12, wherein the first scene point is the pre-selected point, and wherein the descriptors of the first and second scene points comprises information of its position.

In a third aspect of the present invention, a data processing apparatus, comprising means for carrying out the method according to anyone of the previous aspects, are provided.

### BRIEF DESCRIPTION OF THE DRAWINGS

Fig 1 represents an algorithm of the method according to the present invention.
Figs 2a represents a preferred subroutine of the method according to the present invention, in particular the selection of one point by pre-selecting one point (Fig. 2a) in an interpolated mesh 3D model followed by the retrieval of point cloud data in the vicinity of the preselected point and selecting an actual data point acquired by the sensor.
Fig. 2b represents an improved embodiment of Fig. 2a, wherein the method comprises the step of retrieving the actual point cloud data around pre-selected point and display it to the user and let the user pick one point in the point cloud data around pre-selected point.
Fig. 3 represents a preferred subroutine embodiment comprising selecting a point in the textured mesh rendering slowly auto-rotate the model s.t. the user obtains visuals of selected point from a different line of sight.
Fig. 4 represents a preferred subroutine embodiment comprising the step of two points selection, wherein at least one point is highlighted.
Fig. 5 represents a preferred subroutine embodiment comprising the step of one point pre-selection and a view change.
Fig. 6 represents another preferred subroutine embodiment of view change.
Fig. 7 represents a subroutine embodiment for distance measurement according to the present invention.
Fig. 8 represents embodiments showing object representation overlaying.
Fig. 9 represents an embodiment of view position changing and selecting a further scene point.
Fig. 10 represents a gunshot view for selecting a further scene point.

### DETAILED DESCRIPTION OF THE INVENTION

The present invention, in its first aspect, relates to selecting scene points in a 3D model that was generated by a software workflow based on 3D scans of a physical environment such as workflows processing LIDAR or infrared data or a photogrammetry workflow or a software tool workflow generating 3D models not based on 3D scans of a physical environment but representing a physical environment. A person skilled in the art would understand that the disclosed methods may equally be applied on any 3D model consisting of a set of data points in space.

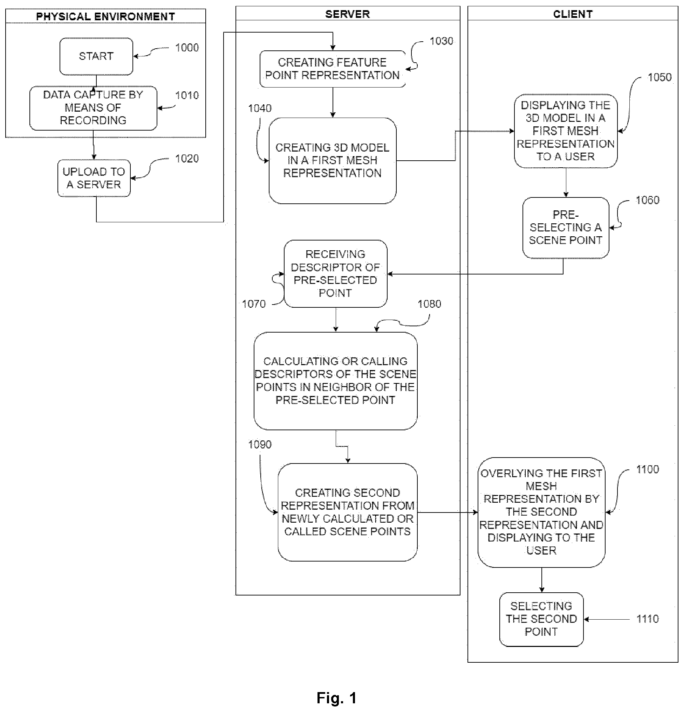

With reference to **Fig. 1****,** in the preferred embodiment, the method starts **1000** by data capturing in the form of video data and further data such as camera position and orientation, focal length, information on the imaging sensor and camera model and/or firmware using a mobile video capture device in step **1010.** In a preferred embodiment, said data also contains depth information captured with LIDAR, infrared or other spectral data and/or ultrasound and combinations of the above. In yet another embodiment, the information obtained by any of the above-mentioned method can be combined, e.g. photogrammetry and LIDAR or ultrasound and photogrammetry. A skilled person may further include another method of obtaining feature points. In a preferred embodiment, the data can be further pre-selected by the state-of-the-art software to remove computation noise. Therefrom, a selected sub data are obtained.

A selected subset of said captured data is uploaded in Step **1020** to a cloud storage or to a desktop computer or a processing unit for further processing after assessing the data captured in Step **1010** for defects such as motion-based defects based on device motion and depth data as known to any person skilled in the art.

In yet another embodiment in Step **1020** said data is uploaded to a cloud storage or a desktop computer or a processing unit, assessed for defects, and a selected subset is stored for further processing in a storage system and database pertaining camera information, motion information, scene and lightning information and/or available computing resources etc.

In yet another embodiment in Step **1020** data from a variety of imaging devices is uploaded to a cloud storage or a desktop computer or a processing unit where said data is grouped and calibrated according to known and pre-determined imaging characteristics of imaging devices such as geometric distortion, vignetting and/or color aberrations.

In step **1030** said selected subset of said captured data is processed: images /video frames are extracted from said selected subset of captured data and feature points in each image/video frames are determined. In the preferred embodiment feature points are detected using the scale invariant feature transform (SIFT) and/or speeded up robust features (SURF). In alternative embodiments alternative feature detection methods such as Harris corner detection, Shi-Tomasi corner detection, FAST algorithm for corner detection, BRIEF (Binary Robust Independent Elementary Features), ORB (Oriented Fast and Rotated Brief) and any combinations of feature detection methods can be utilized.

In step **1040** the geometry of the scene and the objects in the scene are generated. The objects are provided in a first mesh representation. A region around each key feature point is identified. For the region a local feature descriptor, a vector with a number of image region properties, is created and the feature descriptors of two images are compared. In more detail, a best-bin-first search method is used known to a person skilled in the art. In an alternative embodiment the feature points of said step **1030** are combined with motion blur cues of frames, shadows of objects and occlusions to further give information about the geometry of the scene and enhance the match of feature points of image pairs.

In step **1040** a depth map and point cloud is further generated using the said feature points match using triangulation.

The step **1050** comprises the displaying of the 3D model in the first mesh representation to the user on a client, which can be a mobile phone, for example. The user is capable to visually check the scene or the 3D model and pick particular area of interest comprising a scene point. In step **1060** the user pre-selects the scene point for example by pointing and clicking on a particular point in the scene by a mouse. Such information is transferred back to the server, in particular information on the descriptor, wherein the server receives **1070** the information and based on it, the serves calculates or calls **1080** the descriptors of the scene points in the neighbourhood of the pre-selected point. In one embodiment, the descriptor in the neighbour of the pre-selected point can be calculated based on the Euclidian distance. In another embodiment, the descriptor can be calculated based on the amount of the data to be transferred from the server to the client. In yet another embodiment, the descriptor can be called in accordance with tree architecture locating the data in the neighbour, e.g. in one branch of a given tree structure. In this case, the descriptor may contain information about, e.g., texture, material, etc., properties corresponding to the surface of the displayed object.

Further post processing takes place where the post processing is initiated and based on the users input and application specific decisions and can be user assisted improvements of the post processing steps carried out in step **1060.** Furthermore, in step **1090** first pre-selected point and said further point is determined. In the preferred embodiment the said distance between said two points is the Euclidean distance. In an alternative embodiment, the distance between said two points is the shortest path on the 3D model connecting said first and said second point with every point of the path being on the surface of the 3D model.

Refined scene points are used for creating a second representation in a step **1090.** In the preferred embodiment a 3D Delaunay tetrahedralization is employed, or Laplacian filtering is used to remove local artefacts. In a further preferred embodiment, local artefacts are enhanced based on application specific heuristics knowing the real world objects under consideration and making appropriate assumptions s.t. edges of well-known building materials, and in yet another alternative embodiment a machine learning network is employed to remove local artefacts which were pre-trained using known physical objects with known materials and known shapes. In yet another embodiment said machine learning network is "Human in the loop" (HITL) based and specific to the industry and application.

The second representation is transferred **1100** back to the client, wherein the second representation overlays the first mesh representation around the pre-selected scene point so that, the scene contains more value information compared to the first mesh representation.

Preferably, said second representation is stored in the well-known formats OBJ, FBX for the purpose of storing said mesh in an industry standard format that is easy to export and reuse, and that is efficient for rendering purposes.

Preferably, said second representation is rearranged for fast download and efficient storage, as well as for short latency and robustness of the stream. In the preferred embodiment, a single rate mesh compression is utilized where the decompression algorithm generates a mesh that is either identical to the input model or only slightly different with respect to data volume to be transferred. In an alternative embodiment, where the viewing of the model is done with limited transfer bandwidth, progressive model compression is utilized. Progressive compression means that during decompression, reconstruction of successive levels of details is performed as more data are decoded and where the user does not have to wait for all the data to be downloaded and decompressed to visualize the model. In yet another alternative embodiment, random access algorithms are used to decompress only requested parts of the input mesh to save resources if the entire model does not fit into the target device memory to provide some partial access to the model for preliminary viewing. The primary purpose of the rendering is to present the model in a way to enable the selection of model points for accurate measurements. The secondary purpose of the rendering is a "beauty rendering" or artistic rendering.

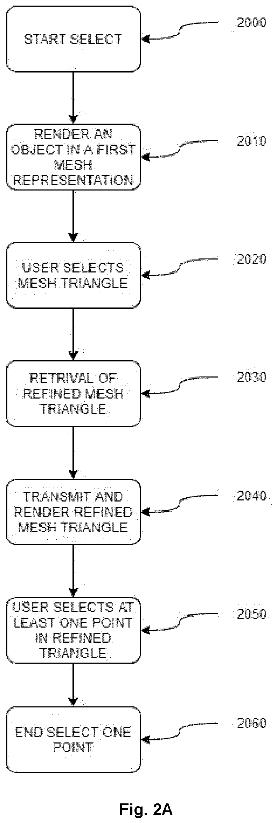

In yet another embodiment, the user selection of one point in the 3D model is described in more detail with reference to subroutine shown in **Fig. 2A****.** The 3D model is selected in step **2000** rendered and displayed to the user as a 3D object in a mesh representation in step **2010.** The user pre-selects in said 3D model a mesh triangle comprising pre-selected scene point, e.g. by the length of time spent on particular spot on scene or by an application button press, in step **2020.** The mesh triangle descriptor to which the pre-selected point belongs is transferred to the server. If a refinement of the selected mesh triangle is available the highest possible refinement **2030** of said mesh triangle is transferred **2040** to the client and displayed. The user finalizes the selection of a point by choosing **2050** a vertex in the displayed (highest refinement) mesh representation **2060.**

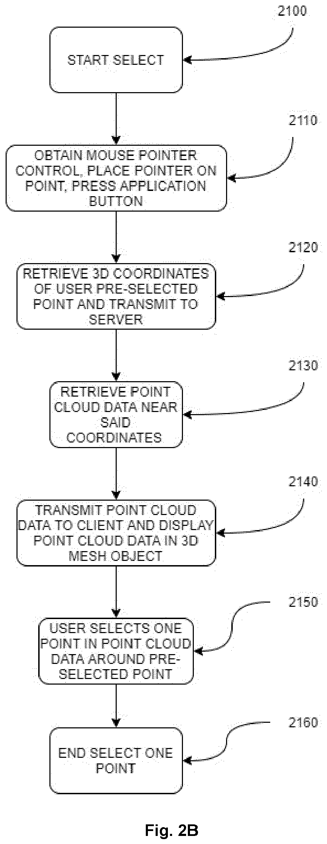

In an alternative embodiment, as shown in subroutine in **Fig. 2B****,** the user selection **2100** of one point in the 3D model is utilizing not only the refined mesh but the point cloud data captured by the sensors. The 3D model is displayed to the user as a 3D object mesh and the user pre-selects in said 3D model one point by the length of time an application button is pressed **2110.** The mesh triangle descriptor, to which the pre-selected point belongs, is transferred to the server. The point cloud data within a proximity of the selected mesh triangle is retrieved **2120** from the server and transferred to the client **2130.** The point cloud data is displayed by superimposing the point cloud data to the 3D object mesh **2140.** The user selects one point of the superimposed point cloud data **2150.** Thereby selecting the final point **2160.** In the preferred embodiment superimposing the point cloud data refers to displaying both the 3D mesh object and point cloud data at the same time to the user around the pre-selected point. In an alternative embodiment superimposing the point cloud data refers to displaying the point cloud data around the pre-selected point while displaying the 3D mesh object otherwise. Both alternatives embodiments shown in **Fig 2A** and **Fig. 2B** can be freely combined, in particular as two subroutines processed in parallel or consecutively.

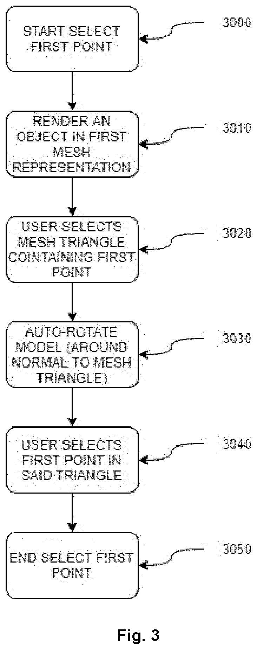

In another embodiment, as shown in subroutine in **Fig. 3****,** a user pre-selects a first point **3000,** the point is not exclusively part of the modelled object, but it can be a point of interest near the modelled object. The nearby point can be highlighted on the display or a plurality of nearby points of interest can be highlighted consecutively. Possible points of interest are corner points, and if the pre-selected point is near a line, then the closest point on the line. The highlighted points of interest can come from point cloud segmentation, such as detecting the points belonging to an edge of the modelled object; and in yet alternative embodiment, the plurality of points of interest determined by the shape with the confidence number associated to each point in the point cloud. Modelled object is rendered and shown to the user in step **3010.** Subsequently, the user is selecting mesh triangle containing the pre-selected point **3020.** The model is rotated around the normal vector to the plane of the triangle mesh **3030.** The user is subsequently selecting the first point more accurately **3040,** thereby obtaining the further point of selection in step **3050** of subroutine.

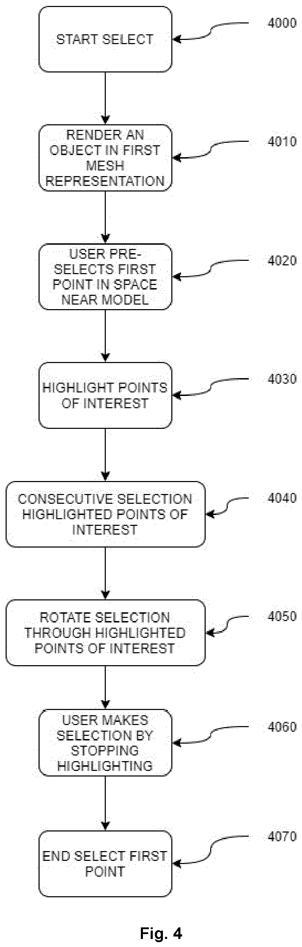

**Fig. 4** schematically shows a subroutine embodiment for the further point selection. The preferred subroutine embodiment of further point selection **4000** starts with rendering **4010** the object mesh. The user pre-selects **4020** a first point in space near model. Available points nearby the pre-selection are subsequently highlighted **4030.** The user can consecutively select **4040** highlighted points of interest. The view on the object is rotated **4050** around highlighted points. Preferably, selection of further points can be stopped **4060** by stopping highlighting. Therefrom, the further scene point can be selected **4070.** In yet another preferred embodiment, the step of pre-selection **4020** comprises of pre-selecting at least two scene points. Between the two pre-selected points, it is possible to virtually draw a line serving as a rotation axis.

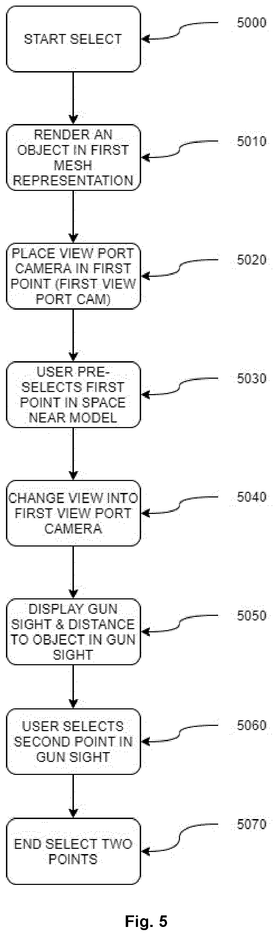

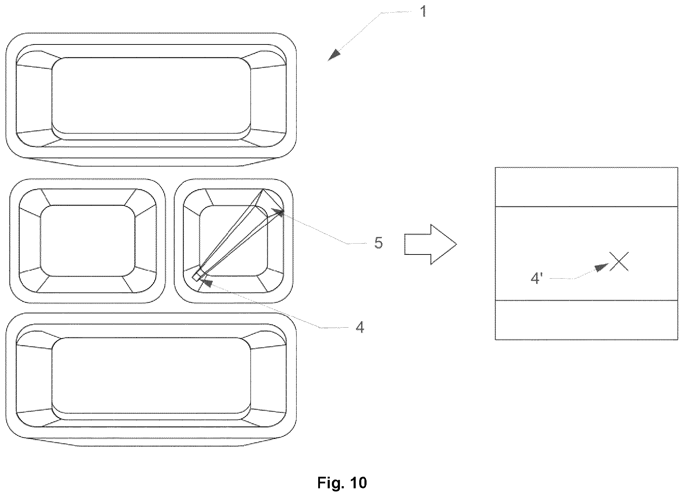

**Fig. 5** schematically shows a further subroutine of a preferred embodiment of a further scene point selection **5000** via a gun sight view. The first point can be pre-selected in accordance with the embodiment shown, for example, in **Fig. 3** or **4****.** The client will subsequently display the view from the position of pre-selected point directing to a surrounding scene. A schematic drawing corresponding to the above-mentioned subroutine is shown in **Fig. 10****.** In particular, **Fig. 10** represents, on the left side, a complex furniture, wherein the user cannot directly see the two points to be selected, for example due to technical limitation of the client, such as small display. Therefore, in the first step **5010,** the object is rendered in a first mesh representation in a first view **5020.** In a next step **5030,** the user pre-selects a scene point **4.** The client will then transform **5040** the view to the position of the pre-selected scene point **4** and display **5050** the second view, for example to the opposite side of the furniture as schematically shown by reference number **5.** Therefore, a user will be able to directly and more precisely focus and/or target on the position of the further point for the selection **5060.** The view from the second position is schematically represented by the right side of **Fig. 10****.** The subroutine ends by the further point selection **5070.**

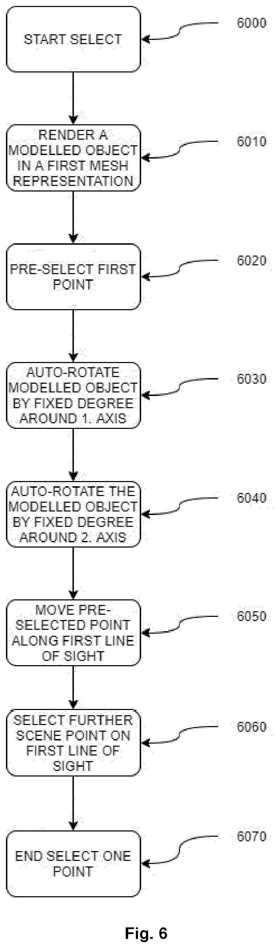

**Fig. 6** schematically shows a subroutine of an embodiment for a further point selection **6000,** wherein the subroutine steps of model rotation is provided. In a first step, the object is rendered **6010** in a mesh representation. The user is pre-selecting **6020** a scene point. The model is subsequently rotated **6030** by a fixed degree around a first axis. The model is subsequently further rotated **6040** around a second axis by a fixed degree. The model is subsequently translated **6050** along the first line of sight. Thereby, selection **6070** of a point is provided.

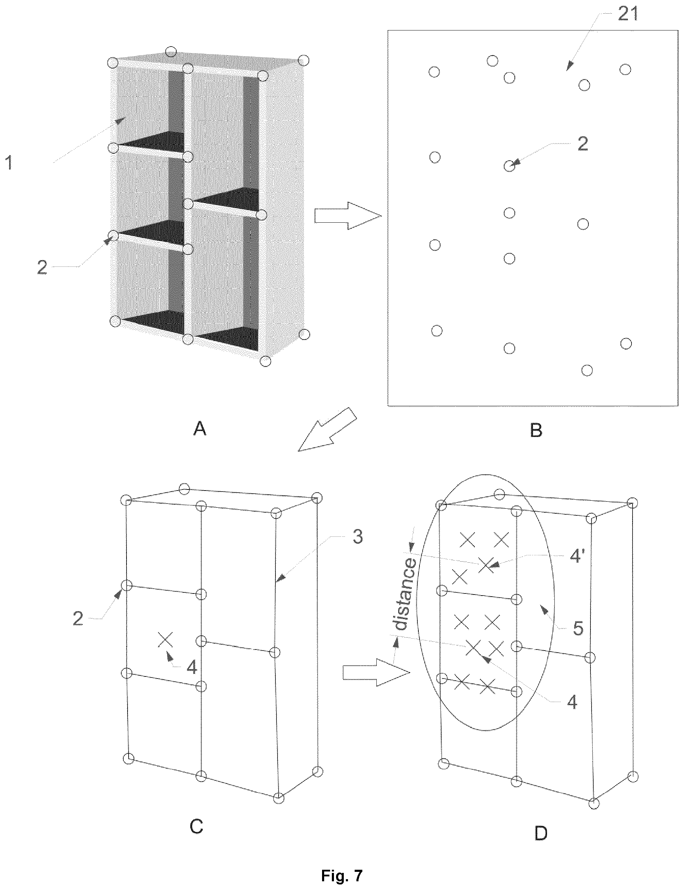

**Fig. 7** further discloses a schematic view on routine steps according to the method of the **present** invention from the client display perspective. In particular, sub-figure A represents an object obtained by 3D model, in particular a cabinet 1. The 3D model is uploaded to a server, wherein the computer programme is capable to identified feature points **2** corresponding to edges of the cabinet. The method according to the present invention will transform the feature points **2** into a point cloud representation **21** as schematically shown in sub-figure B. In the next step, the point cloud representation **21** is transformed into the first mesh representation **3** as systematically shown in sub-figure C. The feature points **2** are not shown to the user, only resulted first mesh representation **3** is displayed. The user can pre-selects the point **4** as shown in sub-figure C. Thereby, this information on pre-selection is transferred from the client to the server. The server will provide computation of the further scene points based on the feature points **2.** The new calculated scene points are transferred from the server to the client and displayed to the user. Scene points for subsequent selection in the neighbourhood **5** of the pre-selected point **4** are displayed, preferably highlighted. The user is subsequently selecting the further point **4'.** In a special embodiment, the user may therefore obtained at least two points. Based on the at least two-point selection and according to Euclidian geometry, distance between the two points can be calculated.

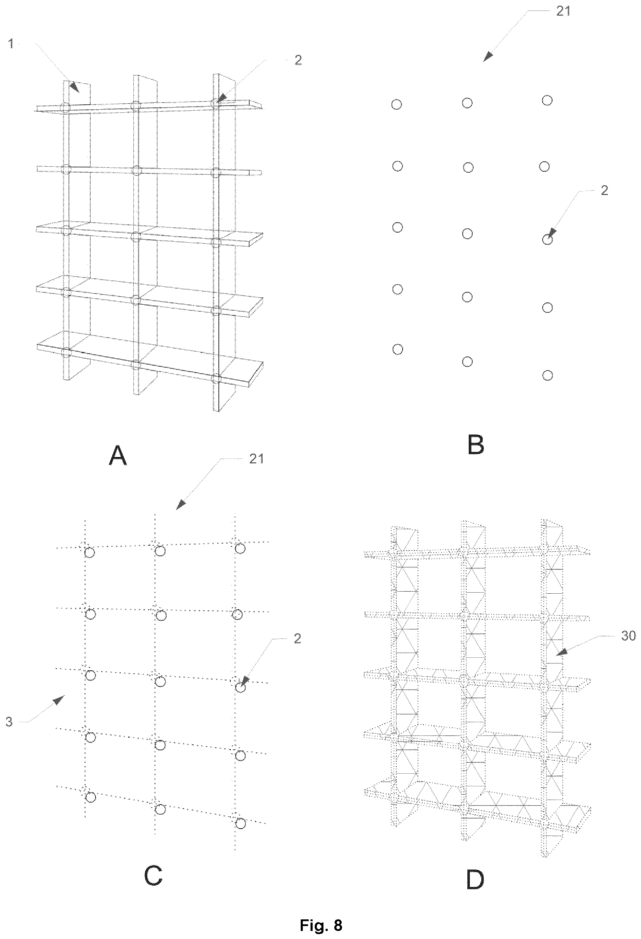

**Fig. 8** represents a special embodiment showing the one possible method of overlying the first mesh representation by the second representation of higher information value with respective to the user view. In this particular embodiment, a second representation is chosen to be a second mesh representation. The sub-figures **8A** - **8D** are particularly connected to the schematic algorithm as shown in figures **2A** and **2B****.** Sub-figure A represents a 3D modelled object **1** and feature points **2** obtained by a computer state-of-the-art programme. The feature points **2** are further transferred to the server, wherein the cloud representation **21** is stored therein. The point cloud representation **21** shown in sub-figure B is transformed into a first mesh representation **3** as show in sub-figure B. Sub-figure **C** represents a first mesh representation **3** before the step of pre-selection point is transferred to the server. Based on the triangulation, for example, further scenes points in a second mesh representation **30** are transferred back to the client. In this case, shown to the user in form of triangles. In this particular example, the second mesh representation is overlaid with the first mesh representation as shown in sub-figure **C.** Therefore it does not directly replace all scene or feature points from first mesh representation, but the second mesh representation complements and supports the view of the user. The same technical effect can be achieved by the complementing and supporting the first mesh representation by the cloud point representation included into the first mesh representation.

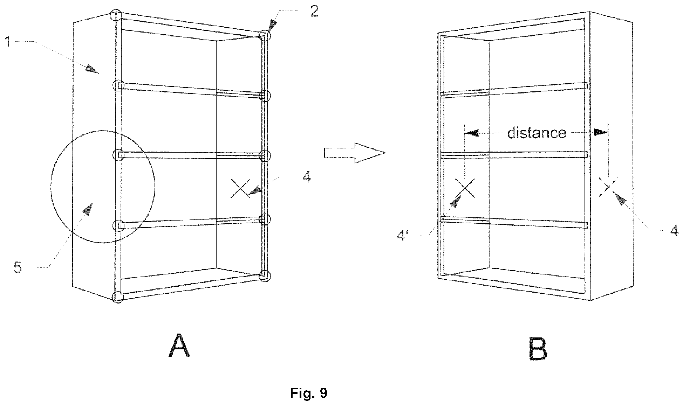

**Fig. 9** represents an advantage embodiment, wherein the view on the client is changed in accordance with the pre-selection scene point **4** set by the user. In particular, sub-figure **A** shows the cabinet, wherein the user will pre-select a scene point **4** and direct the mouse and/or point to an area of interest **5.** This action of pre-selection and choosing the area of interest **5** is then transferred to the server, wherein the server will compute the possible further scene points, in particular on the opposite side of the interior of the cabinet **1.** The further scene points are transferred back to the client and the view is changed as shown in sub-figure B. The user will be able to see the opposite side of the cabinet, which was not available to them in the previous view. The newly calculated scene feature points **4'** are also shown to the user, thereby, it is possible to precisely choose the further scene point.

## Claims

1. A computer-implemented method for selecting a refined scene point in a 3D model, the method comprising the steps in the following order:
a) providing the scene being in a feature point cloud representation uploaded and/or stored on a server;
b) providing 3D model comprising feature points in a first mesh representation converted from the feature point cloud representation;
c) displaying the scene of the 3D model in the first mesh representation to a user on a client;
d) pre-selecting a scene point of the 3D model displayed to the user;
e) transferring a descriptor of the pre-selected scene point to the server,
f) calculating neighbouring scene points descriptor on the server and/or calling the neighbouring scene points descriptor from the server memory, wherein
- the neighbouring scene points are in the neighbourhood of the pre-selected scene point, and wherein
- the calculation and/or calling is based on near neighbour search algorithm of the descriptor of step e); thereby refining a second representation having higher information value compared to the first mesh representation;
g) retrieving the second representation in the pre-defined neighbourhood of the pre-selected scene point from the server and transferring thereof to the client;
h) overlaying the second representation in the pre-defined neighbourhood around the pre-selected scene point with the first mesh representation of the scene and the user pre-selected a point;
i) selecting the refined scene point in the second representation.

2. The method according to claim 1, wherein the step of providing the point cloud representation of the scene comprising the step:
- scanning the physical environment by LIDAR, therefrom deriving the feature points; and/or
- scanning the physical environment by an infrared method, therefrom deriving the feature points; and/or
- scanning the physical environment by ultrasound, therefrom deriving the feature points; and/or
- scanning the physical environment by spectrometric method, therefrom deriving the feature points; and/or
- obtaining the feature points by means of photogrammetry; and/or
- obtaining the feature points by means of a computer-generated 3D model, which is not based on scan of the physical environment.

3. The method according to claim 2, wherein the step of obtaining the feature points by means of photogrammetry comprising the step of capturing the physical environment by a camera in a form of video and/or at least two pictures overlapping at least the part of the physical environment, camera positions and orientations, focal lengths, thereby obtaining physical environmental data; and
converting the physical environmental data into the feature point cloud representation.

4. The method according to claim 2, wherein the feature points are provided by LIDAR, the method further comprising the steps of providing depth information on the physical environment.

5. The method according to any of the claims 2 - 4 further comprising:
assessing physical environmental data captured by the camera for defects, in particular motion-based defects; and/or
grouping and calibrating physical environmental data captured by the camera according to pre-determined imaging characteristics such as geometric distortion, vignetting and/or colour aberrations.

6. The method according to anyone of the claims 2 - 5 further comprising the step of pre-selecting a subset of the physical environment data captured by the camera.

7. The method according to anyone of the claims 1 - 6 further comprising the step of removing local artefacts from feature points in the first mesh representation.

8. The method according to anyone of the claims 1 - 7 further comprising compression of the second mesh representation of the scene for storing.

9. The method according to claim 8 further comprising at least a part decompression of the second mesh representation of the scene for viewing of the scene model with limited data transfer.

10. The method according to anyone of the preceding claims, further comprising a loop of steps c) - h).

11. The method according to anyone of the preceding claims further comprises steps of automating rotating a modelled object on the scene around a first axis; automatic rotating a modelled object on the scene around a second axis; moving the pre-selected point along a first line; and final selection of a further point on the line of sight.

12. The method according to anyone of the preceding claims, wherein the second representation is a mesh or a point cloud representation.

13. The method according to anyone of the preceding claims, wherein the overlaying of the first mesh representation by the second representation is replacing the first mesh representation by a second mesh representation; or including the second point cloud representation into the first mesh representation.

14. A method for measuring distance between two scene points in a 3D model comprising steps of
- selecting a first scene point; and
- selecting a further scene point according to anyone of the claims 1 -12, wherein the first scene point is the pre-selected point, and wherein the descriptors of the first and second scene points comprises information of its position;
- calculating the distance based on the points positions.

15. A data processing apparatus comprising means for carrying out the method according to anyone of the previous claims.
